Europäisches Patentamt

European Patent Office

Office européen des brevets

(11) Publication number: **0 159 819**
A2

## (12) EUROPEAN PATENT APPLICATION

(21) Application number: 85302038.6

(22) Date of filing: 25.03.85

(51) Int. Cl.⁴: **B 62 D 5/08**

(30) Priority: 18.04.84 US 601499

(43) Date of publication of application: 30.10.85
Bulletin 85/44

(84) Designated Contracting States: DE FR GB SE

(71) Applicant: GENERAL MOTORS CORPORATION,
General Motors Building 3044 West Grand Boulevard,
Detroit Michigan 48202 (US)

(72) Inventor: Richard, Dennis Joseph, 101 South Nine Mile
Road, Linwood Michigan 48634 (US)

(74) Representative: Breakwell, John Neil Bower et al, GM
Patent Section Luton Office (F6) P.O. Box No. 3 Kimpton
Road, Luton Beds. LU2 OSY (GB)

(54) **Power steering gear for a vehicle.**

(57) Seal wear of a hydraulic power steering gear housing (12)
is reduced by the formation of discrete texturized hardened
friction bands (90) of the initially smooth wall of a cylindrical
bore (14) in the housing, to force relative rotary motion to
occur, during operation, between the seal (84) and a control
valve element (64) on which the seal is mounted, the material
of the valve element being typically more wear-resistant than
the material of the housing.

## POWER STEERING GEAR FOR A VEHICLE

This invention relates to a power steering gear for a vehicle, as specified in the preamble of claim 1, for example as disclosed in US-A-3 022 772.

Prior to the present invention, vehicle power steering gears have employed open-centre rotary hydraulic valve assemblies connected to and actuated by the vehicle steering wheel for controlling the flow of fluid between a pressure source and an actuator for effecting power-assisted steering of the dirigible wheels of a vehicle. Such rotary control valve assemblies generally include an outer hollow cylindrical steel valve body rotatably mounted within a bore formed in a lightweight high-strength aluminium steering gear housing. The cylindrical valve body is rotatably mounted on an operator-actuated valve spool which is drivingly connected to rack and pinion or other gearing by a lost-motion connection. A torsion bar operatively forming part of the valve assembly provides a spring normally centring the valving when power-assisted steering is not desired, and allowing the valve body and spool to be relatively rotated when power-assisted steering is demanded. The valve body has an annular hydraulic pressure groove and annular left and right-turn power grooves formed in the outer surface thereof, separated by annular seals of reinforced polytetrafluorethylene (eg Teflon) or other hard plastics material which have sliding contact with the inner wall of the bore in the steering gear housing when the valve body is rotated in its bore in response to steering input.

These power steering gears do provide high quality steering with long service life, but the inner surface of the valve bore of the power steering gear housing is comparatively soft and can become grooved or worn by the annular seals to some extent under adverse conditions and after protracted use. This wear may result in leakage across the seals, and thereby detract from operating efficiency and service life, requiring rebuilding or replacement of the valving as well as refinishing of the internal surface of the housing to effect high-efficiency sealing between pressure and power grooves thereof.

The present invention is concerned with providing a new and improved housing and valve assembly for a hydraulically powered steering gear which reduces these deleterious effects resulting from wear, specifically by transferring the wear site of the rotary seals from the rotary valve bore in the housing to the valve body, so minimizing wear at the interface between the seals and the valve bore.

To this end a power steering gear for a vehicle in accordance with the present invention is characterised by the features specified in the characterising portion of claim 1.

In this way the indicated advantages can be achieved with minimal changes to existing valve and housing constructions.

Also, due to the virtual elimination of seal-induced wear, oil flow across the seals is effectively avoided, so that power steering is improved.

The discrete texturized gripping surface means are preferably formed as separate bands on the wall of the bore, advantageously with simultaneous hardening, the formation of such separate texturized bands being conveniently achieved by means of electrical discharge machining, using steps as specified in claim 6.

In the drawings:

Figure 1 is a sectional view, with parts in elevation, of one embodiment of an integral rack and pinion power steering gear and valve assembly in accordance with the present invention, together with a schematically shown hydraulic circuit therefor;

Figure 2 is a fragmentary enlarged view showing a portion of the power steering gear and valve assembly of Figure 1;

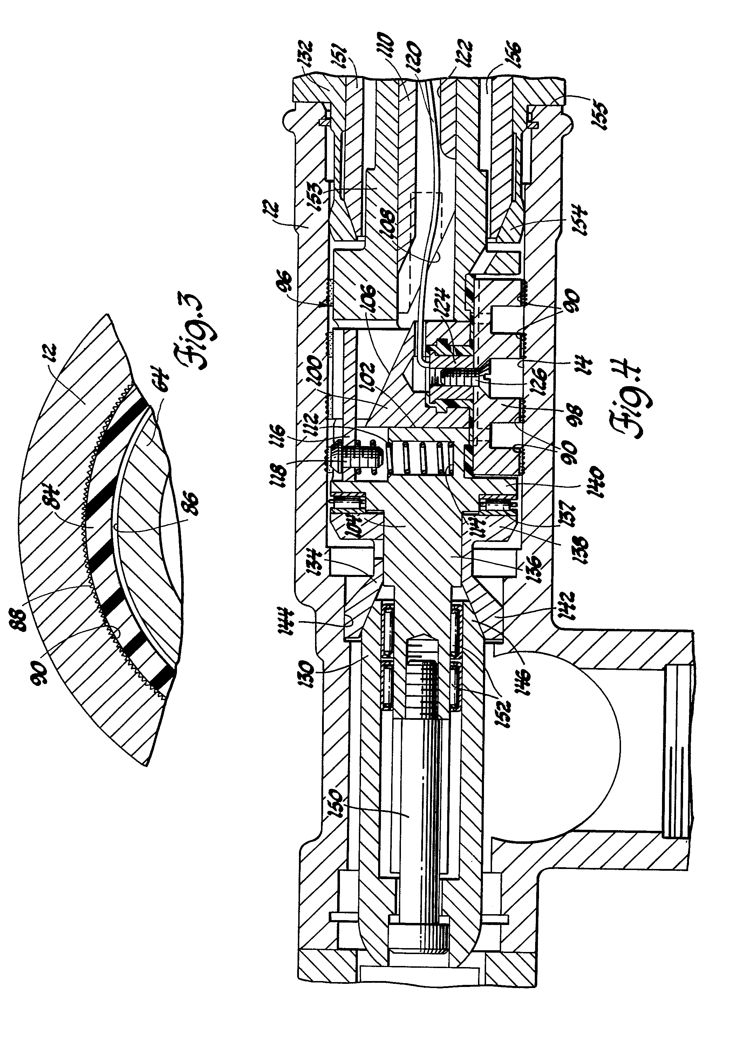

Figure 3 is a fragmentary sectional view on the line 3--3 of Figure 2, in the direction of the arrows; and

Figure 4 is a fragmentary sectional view of the power steering gear housing of Figure 1 with tooling inserted therein for texturizing portions of the valve bore of the housing.

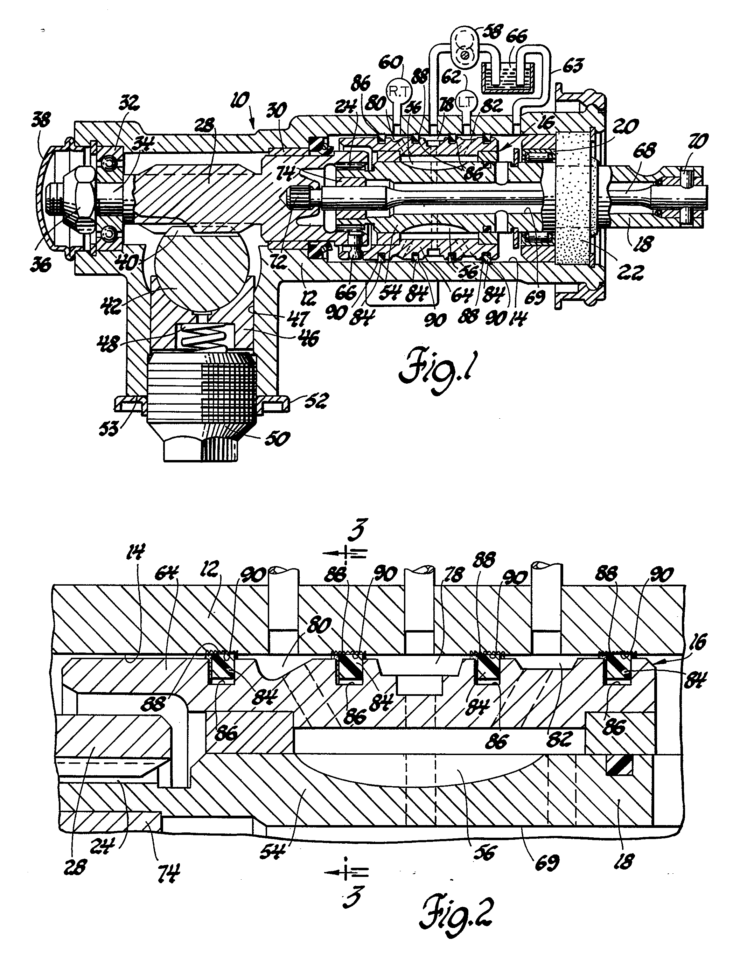

With reference now to the drawings, Figure 1 shows a portion of an integral rack and pinion power steering gear 10 having a main housing 12 cast or otherwise formed from aluminium or other suitable light-weight metal. This aluminium housing 12 has a cylindrical smooth-walled bore 14 formed therein which receives a cylindrical rotary power steering gear valve assembly 16 operatively mounted therein for actuation by a vehicle operator for power-assisted steering of the dirigible wheels of a vehicle, not illustrated. The valve assembly 16 includes an elongate cylindrical spool shaft 18 mounted by a bearing assembly 20 for turning movement in the housing 12. This spool shaft projects through an annular fluid seal 22 closing the upper end of the housing, for connection by a conventional steering shaft to a vehicle steering wheel, not shown. The end of the spool shaft 18 is splined at 24 with a selected predetermined clearance (lash) before mechanical drive to an elongate pinion gear 28 rotatably mounted in the housing 12 by a sleeve bearing 30 and by a ball bearing assembly 32 that receives an extended shank portion 34 of the pinion gear 28. A nut 36 threaded on to the end of the shank portion 34 outboard of the bearing 32 secures the pinion gear within the housing 12. A cup-like cover 38 frictionally fits into an open end of the housing 12 at the lower end thereof to provide service access.

The teeth of the pinion gear 28 mesh with a toothed portion 40 of an elongate rack 42 that is mounted for linear sliding movement within the power steering gear housing 12 and within a connected power cylinder housing which may be like that described in GB-A-2 119 728. The rack 42 is operatively connected to the dirigible wheels of the vehicle by the usual ball joints and tie rods, not illustrated. In such an arrangement, linear movement of the rack turns the dirigible wheels of the vehicle for vehicle steering purposes.

Close meshing engagement between the teeth of the pinion gear 28 and the rack 42 is achieved by the use of a rack contact shoe 46 which is slidably mounted in a second bore 47 in the housing 12 and is biased by a helical spring 48 that is operatively interposed between the contact shoe 46 and an adjusting plug 50. The plug 50 is threaded into the end of the housing bore 47, and can be advanced or retracted by means of a wrench to vary the force of the spring 48 and thereby the tooth engagement forces between the rack and pinion gears for lash adjustment. An adjuster plug nut 52 is threaded on to the plug 50 and against a face 53 of the housing 12 to maintain the plug in a selected position.

The spool shaft 18 of the power steering valve assembly 16 has a cylindrical valve spool 54 formed thereon. The valve spool has a plurality of longitudinally extending arcuate oil transfer slots 56 equally spaced in the periphery thereof. These slots form part of the hydraulic system, which can be conditioned to connect pressure fluid from a hydraulic pump 58 to right or left-turn power cylinder chambers 60, 62 and to an exhaust passage 63 which feeds into a fluid reservoir 66 for the pump 58.

In addition to the valve spool 54, the valve assembly 16 includes a cylindrical steel valve body 64 rotatably mounted within the valve bore 14 and on the valve spool 54. The inner end of the valve body 64 extends over the end of the pinion gear 28, and is drivingly connected thereto by a radial pin 66. An elongate torsion bar 68 extends concentrically through an axial opening 69 in the spool shaft 18 to provide a centring spring connection between the valve spool 54 and the valve body 64. A cross-pin 70 connects the outer end of the torsion bar 68 to the corresponding end of the spool shaft 18, and the inner end of this torsion bar is splined at 72 to the pinion gear 28. A bearing sleeve 74 supports the inner end of the spool shaft 18 on a cylindrical portion of the torsion bar 68. With this torsional spring interconnection, the valve spool 54 can be turned relative to the valve body 64 so that the valve elements route pressure oil for power-assisted steering, and on termination of the rotational input the valve body and the spool are centred by the torsion bar to terminate power-assisted steering. The steering gear valving and the hydraulic system thereof may be like those disclosed in the above-referenced patent application, or like those disclosed in the said US-A-3 022 772.

The valve body 64 is formed with a central annular fluid pressure groove 78 in the outer periphery thereof, disposed between an annular right-turn power groove 80 and an annular left-turn power groove 82. Annular seals 84 of reinforced Teflon (polytetrafluorethylene) or other plastics material are rotatably mounted in annular seal retainer grooves 86 formed in lands separating the pressure groove 78 from the right and left-turn power grooves 80 and 82, and in lands outboard of (flanking) these power grooves. The annular seals 84 are designed to have an outer diameter which closely fits into the bore diameter so that the outer periphery 88 of each seal 84 is in frictional engagement with an aligned annular friction band 90 that is formed by texturizing annular (circular) areas of the initially smooth-walled cylindrical surface of the bore 14 of the main housing 12.

These texturized friction bands 90 provide a high coefficient of friction between the seals 84 and the bore 14 so that the seals are held by the housing 12 when the valve body 64 is turned during steering operation. With this seal retention, the site of relative rotation of the seal is transferred from the comparatively soft surface presented by the bore 14 of the aluminium housing 12 to the hard and wear-resistant surfaces of the retainer grooves 86 of the steel valve body 64. With the seals 84 rotating relative to the steel walls of the retainer grooves 86, there is little or no wear of the wall forming the bore 14, or of the seal retainer grooves 86 or the seals 84 themselves. Accordingly, leakage past the seals 84 is minimized, for increasing the efficiency and service life of the rotary valves of power steering gears.

In addition to providing a high coefficient of friction for the seals 84, the texturized friction bands preferably provide a hardened surface reducing wear that may otherwise occur in the bore wall on inadvertent or unintentional movement of the seals relative to the bore wall. For example, the seals may experience some axial movement in their retention grooves as a result of pressure differentials appearing across the seals. This results in some sliding movement of the seals along the bore wall, and can cause bore wall wear and leakage across the seals. Furthermore, in some cases, relative rotation may occur between the seals and the bore walls because of different rates of expansion and contraction between the seals, the valve housing and the valve body, or because of production tolerance variation resulting in a seal having an outer diameter which only marginally contacts the internal diameter of the bore. Assuming such limited rotation between the seal and the bore wall, the hardened friction surface presented by the bands 90 effectively resists wear and grooving of the bore wall, so that high-efficiency valve operation is effectively maintained.

The friction bands 90 are preferably formed by recasting surface layers of the bore wall to improve the frictional properties and the hardness and wear resistance, using electrical discharge machining (EDM). An illustrative device for electrical discharge machining is shown in Figure 4 in an operating position in the housing 12, and identified by reference numeral 96. The device comprises a four-fingered electrode 98 supported for radial movement towards and away from the wall of the bore 14 by a plunger 100 that is slidable in a radial slot 102 formed in an electrode support fixture 104. The plunger has an inclined camming surface 106 engageable by a similarly inclined camming surface 108 formed on the end of an actuator rod 110 that is mounted for longitudinal sliding movement along the axis of the electrode fixture 104. On such inward axial movement, the camming faces interengage, and the plunger is moved radially outwardly to position the electrode 98 closely adjacent the wall of the housing valve bore 14. A return spring 112 seated in a pocket 114 in the electrode support fixture 104 bears against an arm 116 extending from the plunger 100 to urge the electrode 98 away from the wall of the bore 14. A screw 118 threaded through the arm 116 extends into the end of the helical spring 112 to maintain the spring in its operative position.

A wire conductor 120 extends through a central passage 122 of the actuator rod and is connected to a feeder terminal 124, which in turn is operatively fastened to the electrode 98 by a screw 126.

The electrode and electrode support assembly is positioned for rotation within the housing 12 by upper and lower collets 132 and 134. The lower collet 134 fits on a stepped cylindrical shank portion 136 of the electrode support fixture 104. A needle-type thrust bearing 137 is operatively mounted between a radial flange 138 of the collet 134 and a similar flange 140 on the electrode support fixture 104. The collet 134 has split fingers 142 that are cammed outwardly into engagement with the walls of a counterbore 144 in the housing by engagement with a coned end 146 of a collet actuator (expander) 130. The collet actuator 130 is loosely retained on the shank portion 136 of the electrode support fixture 104 by a screw 150 threaded into the end thereof. Needle bearings 152 interposed between the shank portion 136 and the inner wall of a nose member portion of the collet actuator 130 permit relative rotation of the electrode 98 and electrode support fixture 104 with respect to the upper and lower collets 132 and 134.

The upper collet 132 has a collet actuator tube 151 the end of which fits over a stepped cylindrical shoulder 153 of the electrode support fixture 104. The forward end of this tube is tapered to cam contact fingers 154 of the upper collet against the wall of the valve bore 14. With the fingers 154 being urged outwardly in response to inward movement of the collet actuator tube 151, the electrode support fixture 104 is held within the housing 12 with the electrode 98 positioned by contact of a flange of the upper collet 132 against an end face 155 of the housing.

In operation, the actuator rod 110 is moved inwardly to act against the spring 112 to position the electrode 98 closely adjacent the wall of the bore 14. A dielectric oil is flooded into the housing through a passage 156 between the upper collet 132 and the electrode support fixture 104 whilst the electrode and electrode support fixture is being rotated. Electric current is supplied to the electrode and is discharged across the gap between the electrode and the housing, which is connected to electrical discharge machining circuitry. Ionized oil vapour occurring as bubbles in the oil between the electrode 98 and the housing 12 provides a conductive path for the electrical discharge.

The rotation of the energized electrodes causes annular surface layers of the bore walls to be heated to a temperature sufficient to effect a recasting of the surface to form the laterally spaced bands 90. During this recasting, particulate matter (fines) is expelled from the housing surface and flushed away by the oil exiting through the upper part of the housing. These bands 90 exhibit a hardened layer that may be of a depth up to 30 microns: this layer results from melting and rapid self-quenching of the housing surface that occurs during the EDM process. Silicon-rich second-phase particles which are present in the housing material also become molten during EDM processing, and are retained homogeneously in solution in this surface layer. Formation of the layer together with expulsion of material provide the increased hardness and the texturized frictional surface which co-operates with the seal rings to provide improved seal grip and effectively resist wear with its hardened surface in the event of any seal movement. The finely pitted texturized surface is harder than the bulk material forming the housing, to offer improved wear resistance to any seal ring rotation or sliding movement relative to the housing. The homogeneous microstructure of the surface layer produced by the electrical discharge machining minimizes this contribution to wear.

The rings 90 have been described as being formed by electrical discharge machining, but they could alternatively be made in other ways and in other forms without hardening, for example by grit blasting or by machining knurls of various geometries across the interior surface of the housing bore.

Claims:

1. A power steering gear for a vehicle comprising a metallic housing (12) having a smooth-walled cylindrical bore (14) formed therein, the housing (12) having hydraulic inlet and outlet ports for operative connection to a hydraulic pump (58) and to a sump (66) for the hydraulic pump (58), the housing (12) having a plurality of fluid passages extending through the wall of the housing to the bore therein, a rotary valve assembly (16) rotatably mounted in the bore (14) for supplying fluid pressure to the fluid passages, and a rotatable steering gear input (18), the rotary valve assembly (16) comprising a valve spool (54) operatively connected to the steering gear input (18) and a cylindrical valve body (64) operatively mounted on the valve spool (54) and within the valve bore, and the valve body (64) having a plurality of laterally spaced annular seals (84) rotatably mounted on the outer periphery of the valve body (64) to hydraulically separate the fluid passages, characterised in that discrete texturized gripping surface means (90) are formed on the wall of the bore (14) for directly contacting the outer periphery (88) of the seals (84) such that on rotary movement of the valve body (64) the seals (84) will remain substantially stationary relative to the housing (12), to thereby reduce frictional wear of the cylindrical wall of the bore (14) by the seals (84).

2. A power steering gear according to claim 1, characterised in that the valve body (64) comprises a metallic valve body having a hardness greater than the hardness of the metallic housing (12), the annular seals (84) are rotatably mounted on the outer periphery of the valve body (64) for contacting the wall of the housing bore (14) to provide separate fluid passages therebetween, and the discrete texturized gripping surface means (90) constitute hardened regions formed on the wall of the bore (14).

3. A power steering gear according to claim 1 or 2, characterised in that the metallic housing (12) is formed of a relatively soft metal such as aluminium, the cylindrical valve body (64) is formed of a relatively hard metal such as steel, and the discrete texturized gripping surface means (90) constitute roughened regions formed on the wall of the bore (14).

4. A power steering gear according to any one of claims 1 to 3, characterised in that the valve body (64) has a plurality of annular fluid transmission grooves (78,80,82) formed in the outer periphery thereof, and also has annular seal retainer grooves (86) formed between and flanking the fluid transmission grooves (78,80,82), with the annular seals (84) being rotatably mounted in respective ones of the retainer grooves (86).

5. A power steering gear according to any one of claims 1 to 4, characterised in that the discrete texturized gripping surface means (90) are hardened to resist wear from relative sliding movement between the annular seals (84) and the housing (12).

6. A power steering gear according to any one of claims 1 to 5, characterised by being produced by a method including the steps of forming a cylindrical bore (14) as aforesaid in an aluminium housing (12) as aforesaid, inserting an electrical discharge machine (96) within the bore (14) with spaced electrodes (98) of the machine (96) disposed closely adjacent the wall of the bore (14), effecting electrical discharge from the electrodes (98) while rotating the electrodes (98) relative to the wall of the bore (14) to thereby texturize separate bands (90) as aforesaid on the wall of the bore (14) for gripping seals (84) as aforesaid of the valve body (64), and inserting the valve body (64) with the said seals (84) thereon into the bore (14) so that the seals (84) are directly engaged by the respective texturized bands (90).

7. A power steering gear according to claim 6, characterised in that the electrical discharge from the electrodes (98) is effective to both texturize and harden the separate bands (90) on the wall of the bore (14).

0159819

Fig.1

Fig.2

Fig.3

Fig.4

0159819